# FASCICULE DE BREVET EUROPEEN

(11) **EP 0 630 283 B1**
(45) Date de publication et mention de la délivrance du brevet: **05.04.2000**
(21) Numéro de dépôt: 94904201.4
(22) Date de dépôt: 04.01.1994
(51) Int. Cl.: B01D 53/04, B01J 8/04

(54) **PROCEDE ET UNITE D'ADSORPTION POUR LA PRODUCTION D'UN GAZ PAR SEPARATION D'UN MELANGE GAZEUX**
ADSORPTIONSVERFAHREN UND VORRICHTUNG ZUR ERZEUGUNG EINES GASES DURCH TRENNUNG EINES GASGEMISCHES
ADSORPTION PROCESS AND UNIT FOR THE PRODUCTION OF A GAS BY SEPARATION OF A GASEOUS MIXTURE

(30) Priorité: 08.01.1993 FR 9300140
(43) Date de publication de la demande: 28.12.1994
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: FRAYSSE, Sylvie, F-92260 Fontenay-aux-Roses (FR); MAROT, Christine, F-78530 Buc (FR); PETIT, Pierre, F-78530 Buc (FR); SCUDIER, Jean-Marc, F-63140 Châtel-Guyon (FR)
(74) Mandataire: Le Moenner, Gabriel
(86) Numéro de dépôt international: FR9400012
(87) Numéro de publication internationale: WO9415699

(56) Documents cités:
- EP-A- 0 042 159
- EP-A- 0 118 349
- EP-A- 0 202 516
- EP-A- 0 504 524

## Description

La présente invention concerne les procédés PSA de production d'un gaz par séparation d'un mélange gazeux contenant ce gaz dans au moins une unité d'adsorption comprenant, associés par paire, en série dans un circuit de production dudit gaz, un premier lit d'adsorbant de rétention d'eau et un deuxième lit d'adsorbant de séparation, comprenant une étape de production du gaz dans laquelle le mélange gazeux passe successivement au travers du premier lit puis du deuxième lit.

On sait que, dans les procédés de ce type, dits "PSA" (Pressure Swing Adsorption), il se forme progressivement, en fonctionnement, un gradient de température dans le lit d'adsorbant de séparation, se traduisant notamment, au bout d'une dizaine d'heures de fonctionnement, par la création d'une zone particulièrement froide dans la partie amont du lit de séparation, qui affecte grandement le rendement de production en fonctionnement en cycle à vide ou sous pression, et ce d'autant plus que la pression de fonctionnement est élevée (supérieure à 5 X 10⁵ Pa). Pour remédier à cet inconvénient, il a été proposé de chauffer le mélange gazeux à séparer, comme décrit dans le document US-A-3.973.931 ou de noyer dans la partie amont du lit d'adsorption une source de chaleur, comme décrit dans le document sus-mentionné ou, plus récemment, dans le document EP-A-502.627 qui décrit par ailleurs une unité d'adsorption d'un type tel que celui défini dans le premier paragraphe. Le chauffage du mélange gazeux donne des résultats satisfaisants pour des très petites installations mais devient inopérant, et de plus prohibitif pour des installations à capacités industrielles (supérieures à 0,5 tonne de gaz de production/jour). L'inclusion dans le lit d'adsorbant de moyens de chauffage efficaces obère considérablement les coûts de fabrication.

La présente invention a pour objet de proposer un procédé permettant de façon simple, efficace, n'entraînant qu'un surcoût réduit de fabrication et de faibles coûts d'exploitation, d'éviter sensiblement la formation d'une zone froide, notamment dans des procédés de séparation pour la production d'oxygène sous une pression supérieure à 7 X 10⁵ Pa.

Pour ce faire, selon une caractéristique de l'invention, le procédé comporte les étapes de ménager une portion de passage de gaz intermédiaire de faible extension, établissant une communication directe permanente entre les premier et deuxième lits, et d'apporter à la portion de passage intermédiaire un flux de chaleur pour en remonter la température.

Le document EP-A-0042159 décrit une installation PSA à quatre adsorbeurs associée à un poste épurateur TSA à deux adsorbeurs traitant séquentiellement l'air acheminé successivement aux adsorbeurs PSA par un circuit de distribution.

La présente invention a également pour objet de proposer une unité d'adsorption pour la mise en oeuvre du procédé ci-dessus, tel que défini dans la revendication 6.

D'autres caractéristiques et avantages de la présente invention ressortiront de la description suivante de modes de réalisation, donnés à titre illustratif mais nullement limitatif, faite en relation avec les dessins annexés, sur lesquels:
- la figure 1 est une vue schématique d'une unité d'adsorption pour la production d'un gaz sous haute pression selon l'invention ;
- la figure 2 est une vue schématique en coupe d'une unité d'adsorption à haute productivité et à basse pression selon l'invention ; et
- la figure 3 est une variante de réalisation de l'unité d'adsorption de la figure 2.

Dans la description qui va suivre et sur les dessins, les éléments identiques ou analogues portent les mêmes chiffres de référence, éventuellement indicés.

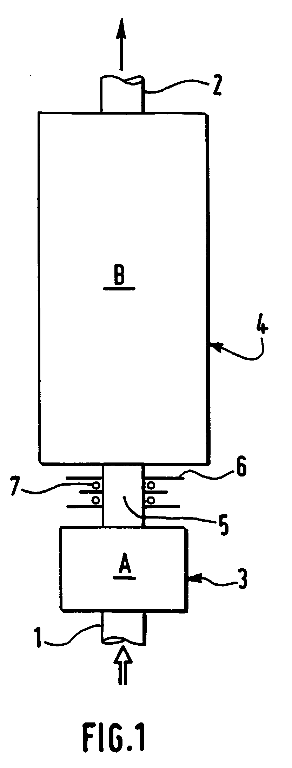

On a représenté sur la figure 1 une unité d'adsorption d'une installation de production d'oxygène haute pression du type PSA comprenant typiquement au moins deux telles unités d'adsorption mises en oeuvre séquentiellement, comme il est connu dans la technique. Chaque unité d'adsorption comporte, en série, en se référant à une phase de production d'oxygène, une entrée d'air sous pression 1, un premier lit d'adsorbant A contenant un matériau susceptible de retenir l'eau et le dioxyde de carbone se trouvant dans l'air, typiquement de l'alumine, associé à un deuxième lit d'adsorbant B, susceptible de retenir l'azote de l'air en laissant passer l'oxygène, typiquement une zéolithe 5A, et une sortie d'oxygène de production 2.

Conformément à un aspect de l'invention, les lits d'adsorbants A et B sont physiquement séparés en étant disposés dans des enveloppes respectives distinctes 3 et 4 reliées par une portion de circuit intermédiaire 5 de diamètre réduit, typiquement nettement inférieur à celui des enveloppes 3 et 4 et de faible longueur. La zone de formation du point froid entre les zones aval du premier lit A et amont du deuxième lit B est ainsi précisément localisée et, par échange de chaleur entre la portion de circuit intermédiaire 5 et l'atmosphère environnante, avantageusement favorisé par des ailettes 6, la température de la zone de formation du point froid est remontée de plusieurs dizaines de degrés C. Pour la production d'oxygène avec une pression d'air d'alimentation d'environ 10 x 10⁵ Pa, avec des lits A et B adjacents dans une même enveloppe, la pureté de l'oxygène de production ne dépasse pas 85 %, en raison de la formation d'un point froid à une température inférieure à -70°C ; avec l'unité d'adsorption selon la figure 1, la température du point froid est ramenée aux alentours de 0°C, et la pureté de l'oxygène de production dépasse 90 % avec une productivité de l'ordre de 10 Nm³/heure/m³. Selon la température ambiante, la température de la zone "froide" peut être contrôlée et régulée dans une plage sélectionnée (typiquement entre 0 et 20°C) par des résistances chauffantes 7 disposées autour de la portion de circuit intermédiaire 5, l'ensemble de l'unité d'adsorption étant alors avantageusement calorifugé.

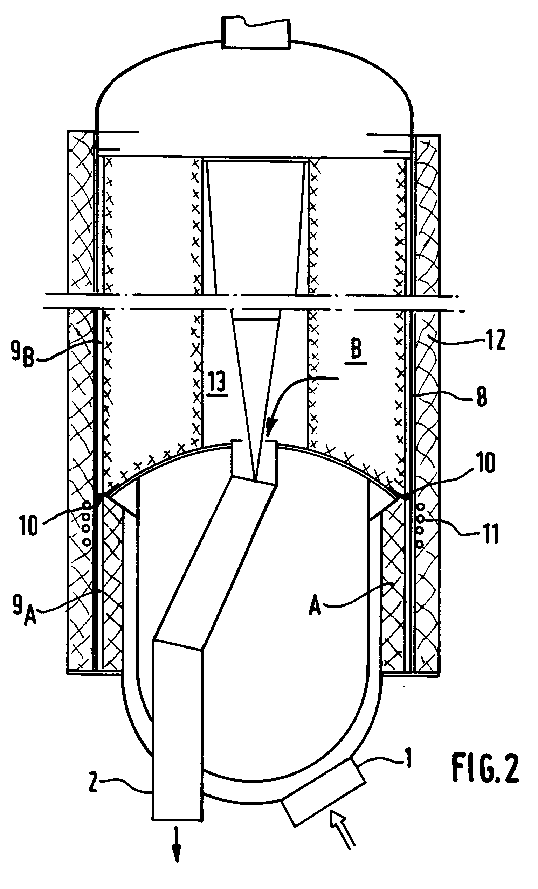

On a représenté sur la figure 2 une unité de production d'oxygène à haute productivité fonctionnant en cycle dit "vide" (pression haute du cycle, entre 0,9 et 1,5 x 10⁵ Pa, et pression basse du cycle notablement inférieure à la pression atmosphérique) et à lits d'adsorbant annulaires superposés, telle que décrite dans EP-A-0 526 343 (demande de brevet francais N^{o} 91.09718 du 31 juillet 1991, au nom de la Demanderesse) publiée en février 1993. Dans ce mode de réalisation, chaque lit est confiné dans une enveloppe à parois tubulaires concentriques perforées et ils sont disposés, l'un au-dessus de l'autre, dans une virole périphérique 8 ménageant, autour des lits A et B, un passage de gaz annulaire 9A, 9B. L'air d'alimentation sous pression introduit dans la canalisation d'entrée 1 traverse le lit d'alumine inférieur A radialement vers l'extérieur jusque dans la partie de passage inférieure 9A d'où il passe dans la partie de passage supérieure 9B pour traverser radialement vers l'intérieur le lit supérieur de zéolithe B, l'oxygène rejoignant centralement la canalisation de sortie 2. Selon l'invention, dans la zone de raccordement entre les parties de passage 9A et 9B, au niveau de la séparation physique, par une cloison, entre l'extrémité supérieure du lit d'alumine A et l'extrémité inférieure du lit de zéolithe B, est disposée une résistance chauffante annulaire 10 pour éviter la formation d'un point très froid au niveau de cette zone d'interface. Avantageusement, un serpentin de chauffage 11, électrique ou à circulation de fluide chaud, est disposé autour de la zone aval du passage intermédiaire 9A pour réchauffer la virole 8, formant radiateur, et éviter également le refroidissement de la partie supérieure du lit d'alumine A. Selon une caractéristique plus particulière de l'invention, comme mentionné précédemment, la totalité des passages intermédiaires 9A et 9B et, partant, des lits A et B, est entourée d'une enveloppe annulaire de matériau isolant 12, par exemple en polystyrène expansé chargé de fibres de verre, rapportée sur la face externe de la virole 8.

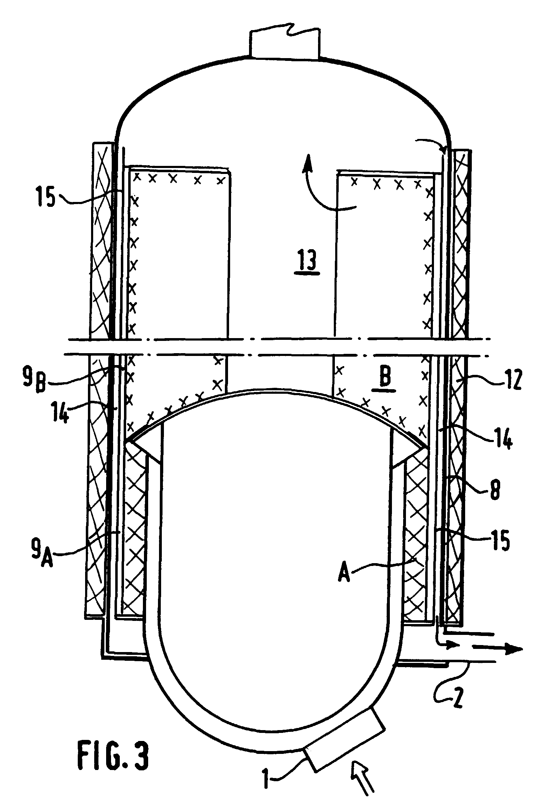

Le mode de réalisation de la figure 3 se distingue de celui de la figure 2 et de la demande de brevet français sus-mentionnée en ce sens que le circuit d'évacuation vers le bas de l'oxygène n'est pas ici central mais périphérique, la zone centrale 13, à l'intérieur du lit B, communiquant par le haut avec un passage annulaire 14 débouchant vers le bas dans la sortie d'oxygène 2 et s'étendant axialement entre la virole 8 portant l'isolation 12 et une virole intermédiaire 15 délimitant extérieurement les parties de passage 9A, 9B. De cette façon, la totalité des parties de passages 9A, 9B, est sensiblement maintenue à la température de l'oxygène de production en sortie du lit supérieur B qui, via la virole 15, est par ailleurs abaissée. Des résistances chauffantes additionnelles telles que 10 et 11, comme décrit en relation avec la figure 2, sont conservées. En variante, seule une portion, annulaire, du circuit de gaz de production, peut être disposée autour de la zone de jonction entre les parties de passages 9A et 9B.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art. Elle peut s'appliquer à la production PSA d'autres gaz que l'oxygène à partir de mélanges gazeux contenant des composants différemment adsorbables par des lits d'adsorbants.

## Revendications

1. Procédé PSA de production d'un gaz par séparation d'un mélange gazeux contenant ce gaz dans au moins une unité d'adsorption comprenant, associés par paire, en série dans un circuit de production dudit gaz, un premier lit (A) d'adsorbant de rétention d'eau et un deuxième lit (B) d'adsorbant de séparation, comprenant une étape de production du gaz dans laquelle le mélange gazeux passe successivement au travers du premier lit puis du deuxième lit, caractérisé en ce qu'il comporte les étapes suivantes:
- ménager une portion de passage de gaz intermédiaire (5) de faible extension établissant une communication directe permanente entre les premier (A) et deuxième (B) lits ; et
- apporter à la portion de passage intermédiaire un flux de chaleur pour en remonter la température.

2. Procédé selon la revendication 1, caractérisé en ce qu'il comporte l'étape de placer la portion de passage intermédiaire (5) en relation d'échange thermique permanent avec une source chaude (6 ; 10 ; 11).

3. Procédé selon la revendication 2, caractérisé en ce que la source chaude est un gaz.

4. Procédé selon l'une des revendications précédentes, caractérisé en ce que le mélange gazeux est de l'air et le gaz de production, l'oxygène.

5. Procédé selon l'une des revendications 1 à 4, caractérisé en ce que la température de la portion de passage de gaz intermédiaire est maintenue à une valeur non inférieure à -20 °C.

6. Unité d'adsorption pour la mise en oeuvre du procédé selon l'une des revendications précédentes, comprenant, en série dans un circuit de production dudit gaz, une entrée de mélange gazeux (1), une paire d'un premier (A) et d'un deuxième (B) lits d'adsorbant associés, et une sortie (2) dudit gaz, caractérisée en ce qu'elle comprend une portion de circuit intermédiaire de faible extension (5) reliant directement au moins une partie aval du premier lit (A) à au moins une partie amont du deuxième lit (B) et associée à des moyens (6; 10; 11; 14) d'apport d'un flux de chaleur au moins au gaz passant dans la portion de circuit intermédiaire.

7. Unité selon la revendication 6, caractérisée en ce que la portion de circuit intermédiaire (5) définit un passage de gaz de section réduite entre les lits d'adsorbants (A, B).

8. Unité selon la revendication 6 ou la revendication 7, caractérisée en ce qu'au moins une partie de la portion de circuit intermédiaire est en relation d'échange thermique avec une source chaude (10; 11).

9. Unité selon la revendication 8, caractérisée en ce que la source chaude est un gaz.

10. Unité selon la revendication 8 ou la revendication 9, caractérisée en ce que la source chaude est un générateur thermique (7; 10; 11).

11. Unité selon l'une des revendications 6 à 10, caractérisée en ce que le premier (A) et le deuxième (B) lits sont disposés respectivement dans des première (3) et deuxième (4) enveloppes adjacentes.

12. Unité selon la revendication 11, caractérisée en ce que les deux enveloppes sont annulaires, la portion de circuit intermédiaire étant annulaire.

13. Unité selon la revendication 12, caractérisée en ce que les premier (A) et deuxième (B) lits sont périphériquement calorifugés (12).

## Claims

1. PSA process for producing a gas by separating a gaseous mixture containing this gas in at least one adsorption unit comprising, combined in pairs, in series in a circuit for producing the said gas, a first bed (A) of water-retaining adsorbent and a second bed (B) of separating adsorbent, comprising a step of gas production, in which the gaseous mixture passes through the first bed then through the second bed in turn, characterized in that it comprises the following steps:
- forming an intermediate portion (5) for the passage of gas which extends only a short distance and makes a permanent direct communication between the first bed (A) and the second bed (B); and
- applying a flow of heat to the intermediate passage portion in order to raise its temperature.

2. Process according to Claim 1, characterized in that it comprises the step of placing the intermediate passage portion (5) in a permanent heat-exchange relation with a hot source (6; 10; 11).

3. Process according to Claim 2, characterized in that the hot source is a gas.

4. Process according to one of the preceding claims, characterized in that the gaseous mixture is air and the gas produced is oxygen.

5. Process according to one of Claims 1 to 4, characterized in that the temperature of the intermediate gas passage portion is maintained at a value not below -20°C.

6. Adsorption unit for implementing the process according to one of the preceding claims comprising, in series in a circuit for producing the said gas, a gaseous mixture inlet (10), a combined pair comprising a first bed (A) and a second bed (B) of adsorbent, and an outlet (2) for the said gas, characterized in that it comprises an intermediate circuit portion (5) which extends only a short distance and directly connects at least a downstream part of the first bed (A) with at least an upstream part of the second bed (B) and which is associated with means (6; 10; 11; 14) for applying a flow of heat at least to the gas passing through the intermediate circuit portion.

7. Unit according to Claim 6, characterized in that the intermediate circuit portion (5) defines a gas passage of small cross section between the adsorbent beds (A, B).

8. Unit according to Claim 6 or Claim 7, characterized in that at least part of the intermediate circuit portion is in a heat-exchange relation with a hot source (10; 11).

9. Unit according to Claim 8, characterized in that the hot source is a gas.

10. Unit according to Claim 8 or Claim 9, characterized in that the hot source is a heat generator (7; 10; 11).

11. Unit according to one of Claims 6 to 10, characterized in that the first bed (A) and the second bed (B) are arranged respectively in a first casing (3) and in a second casing (4) which are adjacent.

12. Unit according to Claim 11, characterized in that the two casings are annular, the intermediate circuit portion being annular.

13. Unit according to Claim 12, characterized in that the first bed (A) and the second bed (B) are thermally insulated (12) at their periphery.

## Patentansprüche

1. Druckwechseladsorptionsverfahren zur Herstellung eines Gases durch Trennung eines dieses Gas enthaltenden Gasgemischs in mindestens einer Adsorptionseinheit, die eine erste Schüttung (A) aus wasserzurückhaltendem Adsorptionsmittel und eine zweite Schüttung (B) aus trennwirksamem Adsorptionsmittel, die paarweise zusammengehören und in einem Kreislauf zur Herstellung dieses Gases hintereinander angeordnet sind, enthält, mit einem Gasherstellungsschritt, bei dem man das Gasgemisch nacheinander durch die erste Schüttung und dann durch die zweite Schüttung leitet, dadurch gekennzeichnet, daß man:
- einen Gasdurchgangszwischenteil (5), der eine geringe Ausdehnung aufweist und eine permanente direkte Verbindung zwischen der ersten Schüttung (A) und der zweiten Schüttung (B) herstellt, bereitstellt und
- dem Durchgangszwischenteil zur Erhöhung der Temperatur einen Wärmestrom zuführt.

2. Verfahren nach Anspruch 1, dadurch gekennzeichnet, daß man den Durchgangszwischenteil (5) in permanente Wärmeaustauschbeziehung mit einer Wärmequelle (6; 10; 11) bringt.

3. Verfahren nach Anspruch 2, dadurch gekennzeichnet, daß man als Wärmequelle ein Gas verwendet.

4. Verfahren nach einem der vorhergehenden Ansprüche, dadurch gekennzeichnet, daß man als Gasgemisch Luft einsetzt und als Produktgas Sauerstoff herstellt.

5. Verfahren nach einem der Ansprüche 1 bis 4, dadurch gekennzeichnet, daß man die Temperatur des Gasdurchgangszwischenteils bei einem Wert von mindestens -20°C hält.

6. Adsorptionseinheit zur Durchführung des Verfahrens nach einem der vorhergehenden Ansprüche, die in einem Kreislauf zur Herstellung dieses Gases hintereinander angeordnet einen Gasgemisch-Eingang (1), ein Paar aus einer ersten Adsorptionsmittelschüttung (A) und einer zweiten Adsorptionsmittelschüttung (B), die zusammengehören, und einen Gasausgang (2) enthält, dadurch gekennzeichnet, daß sie einen Kreislaufzwischenteil mit geringer Ausdehnung (5), der mindestens einen stromabwärts gelegenen Teil der ersten Schüttung (A) direkt mit mindestens einem stromaufwärts liegenden Teil der zweiten Schüttung (B) verbindet und mit Mitteln (6; 10; 11; 14), um mindestens dem durch den Kreislaufzwischenteil hindurchgehenden Gas einen Wärmestrom zuzuführen, zusammengehört, enthält.

7. Einheit nach Anspruch 6, dadurch gekennzeichnet, daß der Durchgangszwischenteil (5) zwischen den Adsorptionsmittelschüttungen (A, B) einen Gasdurchgang mit vermindertem Querschnitt definiert.

8. Einheit nach Anspruch 6 oder 7, dadurch gekennzeichnet, daß das Kreislaufzwischenteil zumindest teilweise in Wärmeaustauschbeziehung mit einer Wärmequelle (10; 11) steht.

9. Einheit nach Anspruch 8, dadurch gekennzeichnet, daß es sich bei der Wärmequelle um ein Gas handelt.

10. Einheit nach Anspruch 8 oder 9, dadurch gekennzeichnet, daß es sich bei der Wärmequelle um einen Wärmeerzeuger (7; 10; 11) handelt.

11. Einheit nach einem der Ansprüche 6 bis 10, dadurch gekennzeichnet, daß die erste Schüttung (A) und die zweite Schüttung (B) in einem ersten Gehäuse (3) bzw. einem zweiten Gehäuse (4), welche aneinander angrenzen, angeordnet sind.

12. Einheit nach Anspruch 11, dadurch gekennzeichnet, daß die beiden Gehäuse ringförmig sind, wobei der Kreislaufzwischenteil ringförmig ist.

13. Einheit nach Anspruch 12, dadurch gekennzeichnet, daß die erste Schüttung (A) und die zweite Schüttung (B) außenherum wärmeisoliert (12) sind.
